**Europäisches Patentamt**

**European Patent Office**

**Office européen des brevets**

(19)

(11) Numéro de publication : **0 197 830**
**B1**

(12)

# FASCICULE DE BREVET EUROPÉEN

(45) Date de publication du fascicule du brevet :
**17.08.88**

(51) Int. Cl.⁴ : **B 29 C 45/16, F 21 V 7/22**

(21) Numéro de dépôt : **86400606.9**

(22) Date de dépôt : **21.03.86**

(54) **Procédé de réalisation d'un réflecteur pour projecteur, notamment de véhicule automobile, par injection moulage bi-matière; moule pour la mise en oeuvre de ce procédé et produit obtenu.**

(30) Priorité : **25.03.85 FR 8504390**

(43) Date de publication de la demande :
**15.10.86 Bulletin 86/42**

(45) Mention de la délivrance du brevet :
**17.08.88 Bulletin 88/33**

(84) Etats contractants désignés :
**DE GB IT**

(56) Documents cités :
**DE-A- 2 320 098**
**FR-A- 2 079 295**
**FR-A- 2 142 067**
**FR-A- 2 529 507**
**GB-A- 2 025 838**

(73) Titulaire : **CIBIE PROJECTEURS**
**17, rue Henri Gautier**
**F-93012 Bobigny Cédex (FR)**

(72) Inventeur : **Montet, Maurice**
**44, avenue de Bellevue**
**F-93170 Bagnolet (FR)**
Inventeur : **Baciu, Antoine**
**5 Cour d'Orléans**
**F-27940 Anbevoye (FR)**

(74) Mandataire : **Martin, Jean-Jacques et al**
**Cabinet REGIMBEAU 26, Avenue Kléber**
**F-75116 Paris (FR)**

## Description

La présente invention concerne la réalisation d'un réflecteur pour projecteur, notamment de véhicule automobile, par un procédé comprenant la fabrication, par injection moulage, d'une paroi comportant une couche de cœur, de volume déterminé, destinée à communiquer au réflecteur ses caractéristiques de résistance mécanique et une couche de peau, de volume déterminé, enveloppant de part et d'autre la couche de cœur en définissant notamment une face concave lisse, destinée à former une face réfléchissante du réflecteur.

Dans sa demande de brevet français N° 82 11 748, publiée sous le numéro 2 529 507, la Demanderesse a décrit la réalisation d'une telle paroi par un procédé comprenant la succession des étapes consistant à :

a) délimiter une empreinte de moulage de la paroi, d'un volume correspondant sensiblement à la somme des volumes respectifs de la couche de cœur et de la couche de peau, au moyen d'une face convexe de moulage présentant une forme complémentaire de celle de la face concave de la paroi à réaliser, et d'une face concave de moulage placée en regard de la face convexe de moulage et espacée de cette dernière, en aménageant un orifice d'injection débouchant dans l'empreinte ;

b) injecter dans l'empreinte, via l'orifice d'injection, un volume d'une matière thermoplastique de peau correspondant sensiblement au volume de la couche de peau de la paroi à réaliser, cette matière thermoplastique présentant une température de plasto-élasticité déterminée et étant injectée à une température supérieure à cette température plasto-élasticité ; la matière thermoplastique de peau ainsi injectée reste rassemblée à proximité immédiate de l'orifice d'injection, dans l'empreinte, dans la mesure où celle-ci délimite un volume correspondant au volume total des couches de la paroi à réaliser ;

c) injecter dans l'empreinte et dans la matière thermoplastique de peau rassemblée à proximité immédiate de l'orifice d'injection, via ce dernier, un volume d'une matière de cœur à l'état fluide correspondant sensiblement au volume de la couche de cœur de la paroi à réaliser, en maintenant la matière thermoplastique de peau à une température supérieure à sa température de plasto-élasticité de telle sorte que la matière de cœur à l'état fluide fasse migrer progressivement la matière thermoplastique de peau contre les faces convexe et concave de moulage, dans le sens d'un éloignement par rapport à l'orifice d'injection, et que la matière thermoplastique de peau s'intercale entre la matière de cœur, d'une part, les faces convexe et concave de moulage, d'autre part, dans l'empreinte ;

d) autoriser ou provoquer un durcissement de la matière thermoplastique de peau, au moins, pour obtenir une paroi rigide à l'intérieur de l'empreinte ;

e) dégager de l'empreinte la paroi rigide ainsi obtenue.

Cette technique, connue sous le nom de « injection bi-matière » est largement utilisée lorsqu'il s'agit de réaliser des pièces dont la couche de cœur est réalisée, comme la couche de peau, en une matière thermoplastique ; dans sa demande de brevet précitée, la Demanderesse combine cette technique d'injection et un choix particulier de la matière thermoplastique de cœur, à savoir du téréphtalate de polyéthylène, et propose d'utiliser la couche de peau à titre de tampon thermique isolant de toute part la couche de cœur vis-à-vis de l'empreinte de moulage, comparativement froide, pour ralentir le refroidissement de la couche de cœur et lui procurer une structure semicristalline particulièrement avantageuse notamment sur le plan mécanique.

Il est apparu que l'on pourrait avantageusement utiliser également, comme matière constituant la couche de cœur, une matière thermodurcissable judicieusement choisie et convenablement chargée, plus économique et résistant mieux aux sollicitations thermiques inhérentes à une utilisation de la paroi obtenue en tant que réflecteur de projecteur, en enveloppant cette couche de cœur d'une couche de peau quant à elle réalisée en matière thermoplastique de façon conventionnelle, pour communiquer à la paroi un état de surface compatible avec son utilisation en tant que réflecteur.

Cependant, il est également apparu qu'il convenait alors d'abandonner le procédé d'injection bimatière, dont les conditions opératoires sont a priori incompatibles avec la coexistence, dans une même empreinte de moulage, d'une matière thermoplastique de peau et d'une matière thermodurcissable de cœur ; en effet, si l'on considère l'étape c d'injection de la matière de cœur, alors supposée thermodurcissable, et de migration conjointe de celle-ci et de la matière thermoplastique de peau, on observe que l'impératif de porter la matière thermoplastique de peau à une température suffisamment élevée pour qu'elle reste fluide s'oppose à l'impératif de maintenir la matière thermodurcissable de cœur à une température suffisamment basse pour qu'elle reste également fluide ; en ce qui concerne l'étape d, on observe que la nécessité de chauffer la matière thermodurcissable de cœur pour provoquer son durcissement alors que la matière thermoplastique de peau doit au contraire être refroidie à cet effet nécessite que l'on pratique dans un premier temps la polycondensation de la matière thermodurcissable par chauffage de celle-ci, puis dans un deuxième temps le durcissement de la matière thermoplastique de peau par refroidissement de celle-ci, en maintenant au cours de ces deux phases successives le produit en cours de réalisation à l'intérieur de l'empreinte afin de conserver à la matière thermoplastique de peau la forme requise ; ceci pose le problème de l'évacuation hors de l'empreinte, à travers la matière thermoplastique de peau, des gaz et vapeurs résultant, comme il est connu de l'Homme du métier, de la polycondensation de la matière thermodurcissable ; en effet, les matières thermodurcissables perdent environ 5 à 7 % de leur poids par évaporation (gaz, vapeur) pendant leur polycondensation, et on a jusqu'à présent considéré qu'un tel dégagement, à l'intérieur de la couche thermoplastique de peau encore à l'état fluide pendant la phase de polycondensation de la matière thermodurcissable de cœur, constituerait un obstacle insurmontable à une liaison mécanique ou chimique entre les deux matières, et conduirait à la formation de bulles dans la matière thermoplastique de peau, communiquant à celle-ci un aspect de surface incompatible notamment avec la définition d'une face concave lisse destinée à former une face réfléchissante d'un réflecteur.

Le but de la présente invention est de lever ces incompatibilités, pour proposer un procédé d'injection bi-matière applicable à la réalisation d'une pièce présentant une couche de cœur en matière thermodurcissable et une couche de peau en matière thermoplastique.

A cet effet, le procédé selon l'invention, reprenant les étapes a, b, c, d, e telles qu'elles ont été définies plus haut, se caractérise en ce que :

— lors de l'étape a, on place en saillie par rapport à la face concave de moulage, à l'intérieur de l'empreinte, une pluralité de plots décalés par rapport à l'orifice d'injection, espacés mutuellement et vis-à-vis de la face convexe de moulage, pour interdire la migration de la matière thermoplastique de peau, lors de l'étape c, contre des zones localisées de la face concave de moulage, situées à l'opposé de l'orifice d'injection par rapport aux différents plots, respectivement, et autoriser alors l'accès de la matière de cœur auxdites zones localisées de la face concave de moulage,

— lors de l'étape c, on injecte à titre de matière de cœur une matière thermodurcissable présentant une température de polycondensation supérieure à la température de plasto-élasticité de la matière thermoplastique de peau, en maintenant l'empreinte de moulage à une température intermédiaire entre lesdites températures respectivement de polycondensation et de plastoélasticité, et l'on escamote lesdits plots par rapport à la face concave de moulage à un stade intermédiaire de l'injection de la matière thermodurcissable de cœur,

— préalablement à l'étape d, on aménage des évents débouchant dans l'empreinte par lesdites zones localisées de la face concave de moulage,

— lors de l'étape d, on provoque un chauffage de l'empreinte à une température supérieure à la température de polycondensation de la matière thermodurcissable de cœur puis on autorise ou provoque un refroidissement de l'empreinte à une température inférieure à la température de plasto-élasticité de la matière thermoplastique de peau.

Ainsi, on est assuré de préserver la fluidité de la matière thermodurcissable de cœur comme celle

de la matière thermoplastique de peau, c'est-à-dire notamment leur possibilité de migration conjointe dans l'empreinte jusqu'à ce qu'elles emplissent cette dernière, sans risque de blocage de cette migration ; lors de celle-ci, la présence des plots constituant un obstacle à la migration de la matière thermoplastique de peau contre la face concave de moulage aboutit à la création, dans la matière thermoplastique de peau en cours de migration, d'interruptions immédiatement comblées par la matière thermodurcissable de cœur qui forme ainsi dans la matière thermoplastique de peau des nervures au contact direct de la face concave de moulage, alors que la matière thermoplastique de peau migre sans interruption contre la face convexe de moulage ; lorsque l'on provoque la polycondensation de la matière thermodurcissable de cœur, les gaz et vapeurs provoqués par cette polycondensation peuvent traverser sans la perturber la couche de matière thermoplastique de peau, via les nervures, pour gagner les évents débouchant dans l'empreinte précisément face à ces nervures ; ainsi, on évite toute migration des gaz et vapeurs de polycondensation vers la face convexe de moulage, qui forme dans la couche de peau une face concave lisse.

Si, conformément à un mode de mise en œuvre préféré du procédé selon l'invention, la face convexe de moulage présente un poli spéculaire, elle communique ainsi ce poli spéculaire à la face concave de la pièce obtenue, et l'on peut procéder au dépôt direct d'une couche métallique réfléchissante sur cette face, sans les étapes traditionnelles d'ébavurage, de nettoyage, de vernissage, ce qui permet de simplifier considérablement la fabrication du réflecteur, et de réaliser une économie sensible de prix de revient.

Avantageusement, l'ancrage de la couche métallique réfléchissante est facilité par l'incorporation de micro-charges minérales, par exemple d'oxyde de titane, de sulfate de baryum, ou autres pigments, à la matière thermoplastique de peau.

De préférence, la face concave de moulage est granitée, ce qui ajoute à l'action des plots un effet de ralentissement sur la matière thermoplastique de peau, et facilite la substitution à celle-ci de la matière thermodurcissable de cœur sous forme de nervures au contact direct de la face concave de moulage.

On remarquera que si la paroi obtenue présente une émergence de nervures de matière thermodurcissable de cœur dans la matière thermoplastique de peau ainsi que, éventuellement, un état de surface granité résultant de celui de la face concave de moulage, cette émergence et cet état de surface sont limités à une face convexe formée par la face concave de moulage, et ne présentent pas d'inconvénient puisque seule la face concave de la paroi est destinée à constituer une face réfléchissante du réflecteur ; les nervures se révèlent au contraire avantageuses, car elles constituent en elles-mêmes un renfort du réflecteur et permettent de réduire l'épaisseur que présente par ailleurs la couche de cœur, avec pour résultat

un allégement global du réflecteur et une économie de matière thermodurcissable de cœur.

D'autres caractéristiques et avantages de l'invention ressortiront de la description ci-dessous, relative à un mode de mise en œuvre non limitatif du procédé, ainsi que des dessins annexés qui font partie intégrante de cette description.

— La figure 1 montre une vue d'un moule destiné à la mise en œuvre du procédé selon l'invention, en coupe par un plan incluant un axe définissant un axe optique pour le réflecteur réalisé au moyen de la paroi fabriquée dans ce moule.

— Les figures 2 et 3 illustrent deux stades successifs de la migration des matières de peau et de cœur dans l'empreinte du moule, en une coupe selon un plan repéré en II-II à la figure 1, le moule proprement dit n'ayant pas été représenté.

— Les figures 4 et 5 montrent des vues partielles, en coupe respectivement par les plans repérés en IV-IV et V-V à la figure 3.

— La figure 6 montre, en une vue en perspective, la paroi obtenue par la mise en œuvre du procédé dans le moule illustré à la figure 1.

— Les figures 7 et 8 montrent des vues partielles de cette paroi en coupe par les plans repérés respectivement en VII-VII et VIII-VIII à la figure 6.

— Les figures 9 à 11 montrent, en des vues en perspective, différentes formes de plots utilisables pour provoquer dans la matière thermoplastique de cœur en cours de migration des interruptions en vue de l'émergence de la matière thermodurcissable de cœur.

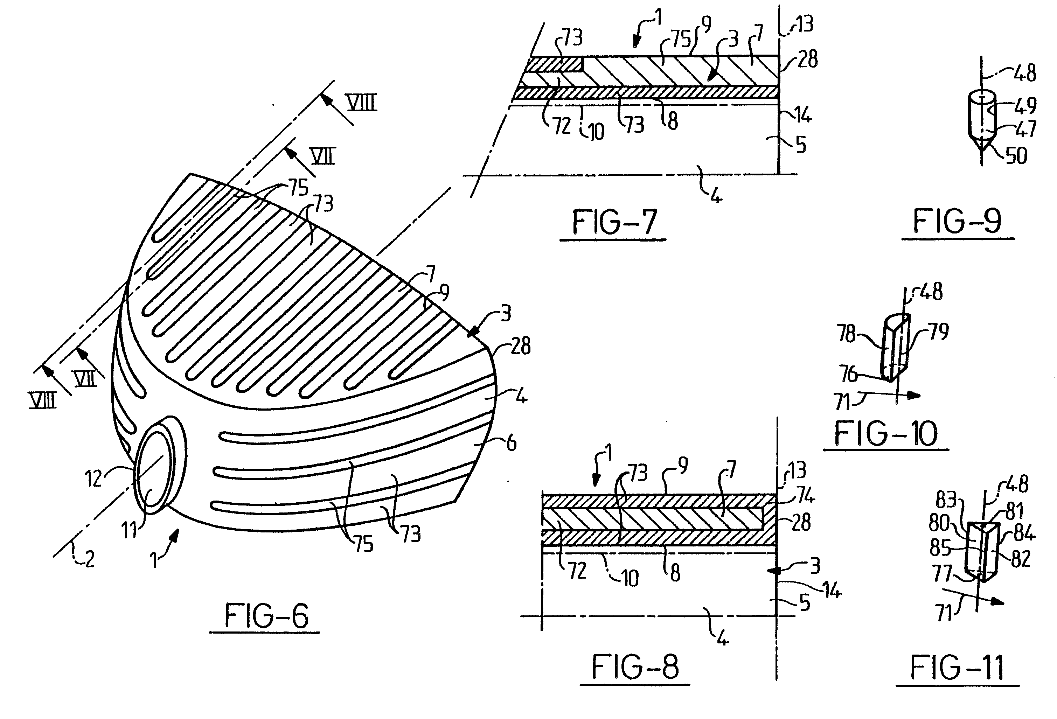

Sur ces figures, on a illustré à titre d'exemple non limitatif la fabrication d'un réflecteur 1 présentant une forme générale connue en elle-même, et plus particulièrement visible aux figures 6 à 8 ; dans cet exemple, le réflecteur 1 présente un axe optique 2, et il est délimité par une paroi 3 symétrique par rapport à l'axe 2 et comportant :

— une zone 4 délimitée par des faces 5 et 6 parallèles entre elles et respectivement concave et convexe, épousant la forme de paraboloïdes respectifs de révolution autour de l'axe 2,

— deux zones telles que 7 dont chacune est délimitée par une face plane telle que 8 tournée vers l'axe 2 auquel elle est parallèle et par une face plane telle que 9 parallèle à la face telle que 8 et à l'axe 2, en étant tournée dans le sens d'un éloignement radial par rapport à ce dernier.

La face concave 5 de la zone 4 de la paroi 3 et les faces telles que 8, tournées vers l'axe 2, des zones telles que 7 de cette paroi définissent conjointement une face concave, lisse, destinée à former une face réfléchissante du réflecteur 1 après revêtement par une couche métallique réfléchissante 10, par exemple en aluminium ; la face convexe 6 de la zone 4 et les faces telles que 9, tournées vers l'extérieur, des deux zones telles que 7 de la paroi 3 sont par contre dénuées de tout rôle optique.

Autour de l'axe 2, la zone 4 de la paroi 3 est percée de part en part d'un trou 11 de montage d'une lampe, lequel présente une forme de révolution autour de l'axe 2 ; autour du trou 11, la face 6 de la zone 4 de la paroi 3 présente un rebord annulaire 12, de révolution autour d'un axe 2, destiné à recevoir des moyens de montage de la lampe.

A l'opposé du trou 11 suivant l'axe 2, la paroi 3 présente un chant 28 suivant un plan 13 perpendiculaire à l'axe 2, ce qui définit pour le réflecteur 1 une face ouverte 14, destinée à l'émission de lumière.

Naturellement, cette forme ne constitue qu'un exemple non limitatif, et l'Homme du métier comprendra aisément que d'autres formes de réflecteur pourraient être réalisées par le procédé conforme à la présente invention, sans que l'on sorte pour autant du cadre de celle-ci.

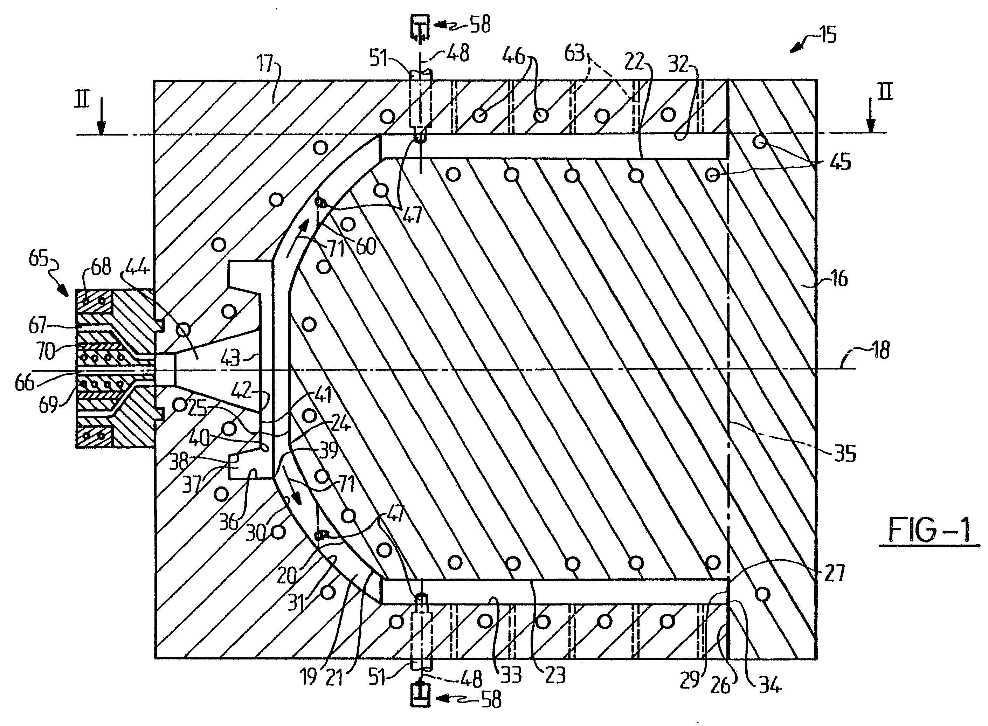

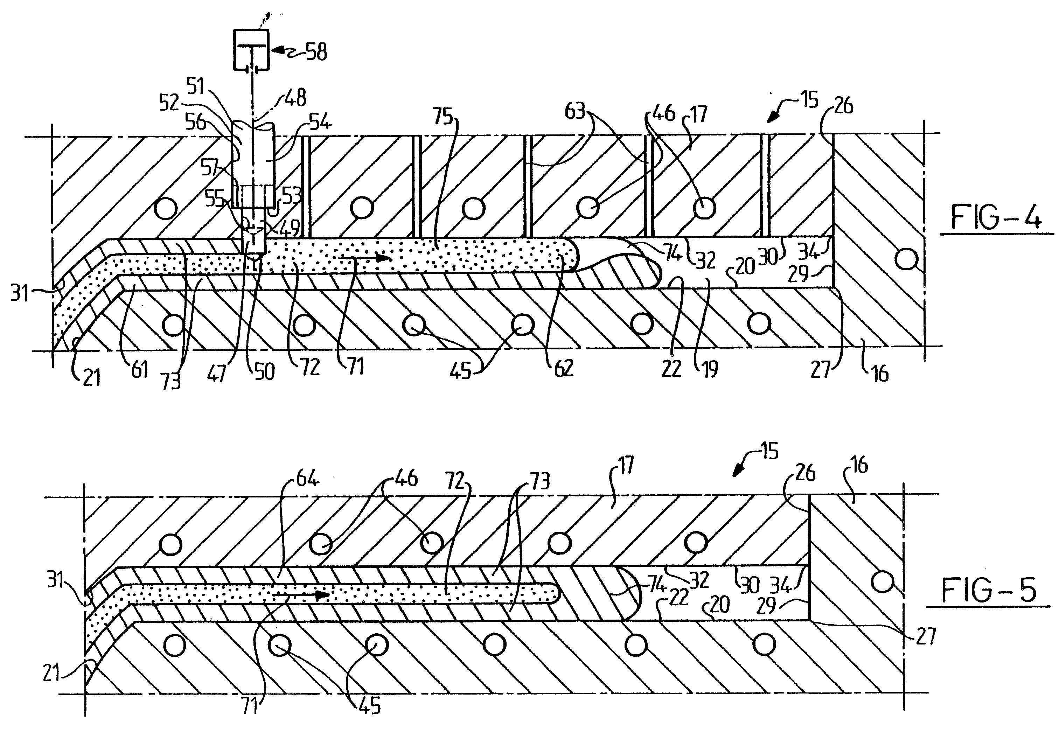

Selon l'invention, les différentes zones de la paroi 3, le rebord annulaire 12 ainsi qu'une rondelle obturant provisoirement le trou 11 sont réalisés en monobloc par injection moulage bi-matière, dans un moule dont un exemple de réalisation est schématisé à la figure 1 ainsi que, partiellement, aux figures 4 et 5.

De façon conventionnelle, le moule 15 illustré comporte un poinçon 16 et une matrice 17 susceptibles d'être assemblés dans une position relative rigoureusement définie, dans laquelle ils présentent un axe commun 18 et définissent entre eux une empreinte de moulage 19 d'une forme rigoureusement complémentaire de celle de la paroi 3 y compris la rondelle (non représentée) d'obturation provisoire du trou 11 et le rebord 12 comme il est illustré à la figure 1, ou au contraire d'être séparés pour ouvrir l'empreinte 19.

Plus précisément, le poinçon 16 délimite l'empreinte 19 par une face convexe de moulage 20 présentant une zone 21 rigoureusement complémentaire de la face 5, c'est-à-dire en forme de paraboloïde de révolution autour de l'axe 18, et deux zones 22 et 23 rigoureusement complémentaires respectivement de l'une et l'autre des faces telles que 8, c'est-à-dire planes et parallèles entre elles et par rapport à l'axe 18 dont on notera qu'il définit pour l'empreinte 19 un axe de symétrie de même que l'axe 2 définit un axe de symétrie pour la paroi 3 ; dans le sens d'un rapprochement radial par rapport à l'axe 18, la zone 21 de la face convexe de moulage 20 se raccorde, par une arête circulaire 24, à une zone 25 en forme de disque plan perpendiculaire à l'axe 18, cette zone 25 étant destinée au formage de la rondelle d'obturation provisoire du trou 11 ; dans le sens d'un éloignement radial vis-à-vis de l'axe 18, la zone 21 de la face convexe de moulage 20 se raccorde d'une part aux zones 22 et 23 et d'autre part à une face plane 26 perpendiculaire à l'axe 18 et bordant également les zones 22 et 23 de la face 20 en présentant, le long d'une arête continue 27 de liaison avec les différentes zones 21, 22, 23, une zone 29 étroitement complémentaire du chant 28 du réflecteur 1 à réaliser.

Au moins les zones 21, 22, 23 de la face convexe de moulage 20 présentent avantageusement un poli spéculaire.

La matrice 17 délimite quant à elle l'empreinte 19 par une face concave de moulage 30 présentant une zone 31 en forme de paraboloïde de révolution autour de l'axe 18, étroitement complémentaire de la face 6, et deux zones planes, parallèles entre elles et à l'axe 18, respectivement 32 et 33, rigoureusement complémentaires des faces telles que 9 ; dans le sens d'un éloignement radial vis-à-vis de l'axe 18, la zone 31 est délimitée d'une part par jonction avec les zones 32 et 33 et d'autre part par interruption, de même que les zones 22 et 23, suivant un plan virtuel 35 perpendiculaire à l'axe 18 et commun à la face 26 du poinçon 16, le long d'une arête 34 de jonction avec cette face 26 ; dans le sens d'un rapprochement radial vis-à-vis de l'axe 18, la zone 31 de la face concave de moulage 30 se raccorde par une arête circulaire 39, d'axe 18, à un flanc 36 d'une rainure 37 de révolution autour de l'axe 18, laquelle rainure 37 présente par ailleurs un flanc 38, situé plus près de l'axe 18 que son flanc 36 et se raccordant, le long d'une arête 40 également circulaire d'axe 18, à une face annulaire plane 41 se raccordant elle-même, par une arête circulaire 42 d'axe 18, située plus près de cet axe 18 que l'arête 40, à un orifice 43 par lequel un canal d'injection 44, d'axe 18, débouche dans l'empreinte 19 ; on remarquera que les zones 31, 32, 33 de la face concave de moulage 30 sont espacées des zones 21, 22, 23 de la face convexe de moulage 20 sur toute leur étendue, de même que la face 41 est espacée de la zone 25 de la face convexe de moulage 20, si bien que l'empreinte de moulage 19 communique intégralement avec l'orifice d'injection 43.

La structure de poinçon 16 et de matrice 17 qui vient d'être décrite est traditionnelle, et l'Homme du métier saura quelle géométrie donner au poinçon 16 et à la matrice 17 en fonction de toute forme désirée de réflecteur 1 à réaliser ; il saura également prévoir des moyens de positionnement relatif rigoureux du poinçon 16 et de la matrice 17, de même qu'il saura munir le poinçon 16 et la matrice 17 de moyens de chauffage et de refroidissement forcés de l'empreinte 19, schématisés aux figures 1, 4, 5 par des canaux 45 de circulation de fluide dans le poinçon 16 à proximité immédiate des différentes zones de la face convexe de moulage 20, et par des canaux 46 de circulation d'un tel fluide dans la matrice 17, le long de la face concave de moulage 30, de la rainure 37 et du canal d'injection 44.

Le moule illustré à la figure 1 se distingue des moules habituellement utilisés en injection moulage, notamment de deux matières thermoplastiques, par un état de surface granité de la face concave de moulage 30 au moins dans ses zones 31, 32, 33, et par la présence de plots tels que 47 susceptibles d'être mis en saillie à l'intérieur de l'empreinte 19, par rapport à ces trois zones 31, 32, 33 de la face concave de moulage 30, ou au contraire d'être escamotés dans la matrice 17 par rapport à ces zones 31, 32, 33.

L'un de ces plots 47, correspondant à la zone 32 de la face concave de moulage 30, est plus particulièrement visible à la figure 4 où on l'a illustré en traits pleins dans sa position en saillie à l'intérieur de l'empreinte 19, et en traits mixtes dans sa position d'escamotage à l'intérieur de la matrice 17, étant entendu que la description de ce plot s'applique également aux plots analogues placés dans les zones 31 et 33 de la face concave de moulage 30.

Le plot 47 visible à la figure 4, également représenté à la figure 9, présente une forme générale de révolution autour d'un axe 48 perpendiculaire à la zone 32 à laquelle il correspond ; dans le sens d'un éloignement radial par rapport à l'axe 48, ce plot 47 est délimité par une face 49 cylindrique de révolution autour de l'axe 48 alors que, transversalement par rapport à cet axe, il est délimité vers l'empreinte 19 par une face d'extrémité 50, conique de révolution autour de l'axe 48 et convergeant vers la zone associée 22 de la face convexe de moulage 20 ; à l'opposé de sa face d'extrémité 58 suivant l'axe 48, le plot 47 se raccorde de façon solidaire à une tige 51 délimitée par une face 52 cylindrique de révolution autour de l'axe 48 avec un diamètre supérieur à celui de la face 49 du plot 47, si bien que la face 49 de ce dernier est reliée à la face 52 de la tige 51 par un épaulement annulaire 53, de révolution autour de l'axe 48.

Pour recevoir le plot 47 et la tige 51, et les guider au coulissement suivant l'axe 48, la matrice est percée d'un alésage 54 débouchant dans la zone 32 de la face concave de moulage 30, plus près de la jonction de la zone 32 avec la zone 31 que de l'arête 34 ; à sa jonction avec la zone 32, l'alésage 54 est délimité par une face 55 cylindrique de révolution autour de l'axe 48 avec un diamètre sensiblement identique à celui de la face 49 du poinçon 47 de façon à établir un contact coulissant, alors qu'il est délimité par ailleurs par une face 56 également cylindrique de révolution autour de l'axe 48 avec un diamètre sensiblement identique à celui de la face 52 de la tige 51 pour établir également un contact coulissant ; les faces 55 et 56 sont reliées par un épaulement annulaire 57 de révolution autour de l'axe 48, lequel épaulement annulaire 57 sert de butée pour l'épaulement annulaire 53, et limite ainsi le coulissement de l'ensemble tige 51 — plot 47 vers l'intérieur de l'empreinte 19 ; la distance séparant l'épaulement 57 de la zone 32 de la face 30, parallèlement à l'axe 48, est inférieure à la dimension que la face 49 du plot 47 présente parallèlement à l'axe 48 de telle sorte que la butée mutuelle des épaulements 53 et 57 corresponde à une saillie du plot 47 à l'intérieur de l'empreinte 19, par rapport à la zone 32 de la face 30 ; toutefois, le plot 47 présente une dimension horstout, parallèlement à l'axe 48, d'épaulement 53 à la face 50, inférieure à la distance séparant l'épaulement 57 de la zone 22 de la face 20 associée à la zone 32 de la face 30 de telle sorte que, lorsque les épaulements 53 et 57 sont en butée mutuelle, la face d'extrémité 50 du plot 47 reste espacée de la zone 22 de la face 20 comme on l'a illustré à la figure 4 ; par rapport à une telle position, un coulissement conjoint de la tige 51 et du plot 47 à l'intérieur de l'alésage 54 parallèlement à l'axe 48 de façon à décaler mutuellement les épaulements 53 à 57 permet d'escamoter totalement le plot 47 par rapport à la zone 32 de la face 30.

Le coulissement de la tige 51 et du plot 47 dans la matrice 17 peut être provoqué à volonté par tout moyen approprié, et par exemple par des moyens hydrauliques schématisés en 58, avantageusement communs à plusieurs plots 47 de telle sorte que leur mouvement d'escamotage ou de mise en saillie à l'intérieur de l'empreinte 19 soit simultané.

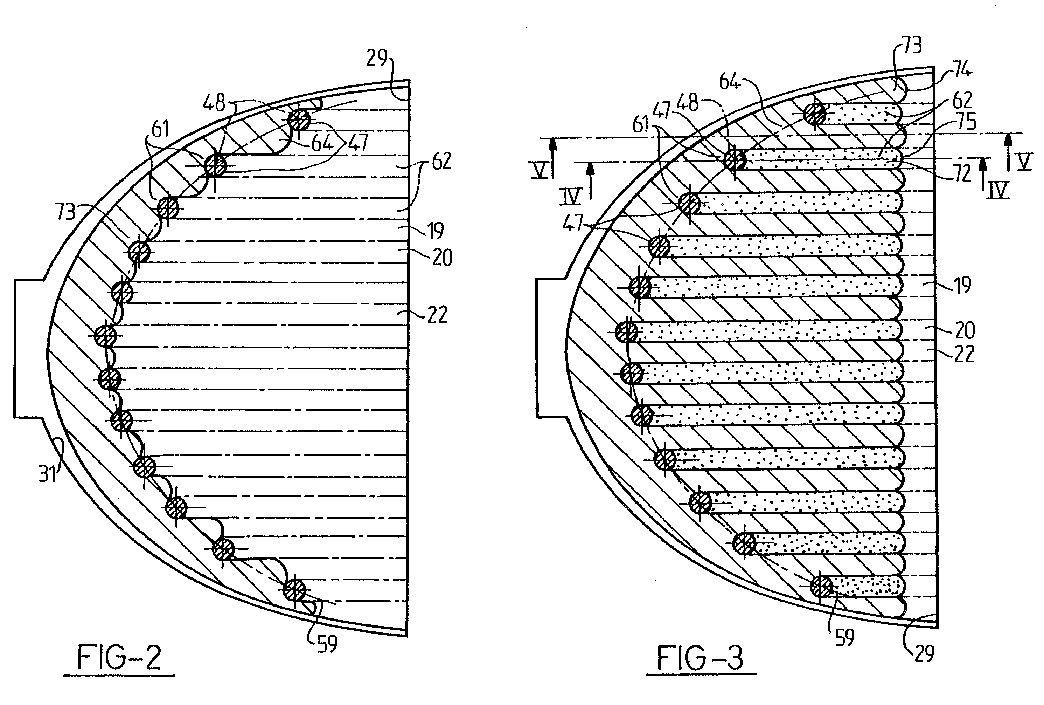

Plusieurs plots 47 sont ainsi prévus dans la zone 32, dans laquelle ils se répartissent le long d'une courbe virtuelle 59 longeant la jonction de la zone 32 avec la zone 31, en étant espacés deux à deux le long de cette courbe 59 comme il ressort de l'examen des figures 2 et 3 ; les plots sont disposés d'une façon analogue dans la zone 33, dans laquelle ils se répartissent le long d'une courbe virtuelle longeant la jonction de cette · zone 33 avec la zone 31 ; ces plots, montés au coulissement dans la matrice 17 de la façon décrite précédemment, peuvent amenés, par action sur les moyens 58, dans une position d'escamotage par rapport à la zone 33, ou dans une position dans laquelle ils forment une saillie par rapport à cette face 33 en restant toutefois espacés vis-à-vis de la zone correspondante 23 de la face convexe de moulage 20 ; dans la zone 31, les plots 47 sont montés au coulissement de la même façon par rapport à la matrice 17, entre une position d'escamotage vis-à-vis de la zone 31 et une position dans laquelle ils forment saillie à l'intérieur de l'empreinte 19 en restant toutefois espacés vis-à-vis de la zone 21 de la face convexe de moulage 20 ; dans cette zone 31 de la face concave de moulage 30, les plots 47 sont répartis suivant un cercle virtuel 60 d'axe 18, situé entre l'arête 39 de jonction avec la rainure 37 et la jonction de la zone 31 avec les zones 32 et 33, en étant espacés deux à deux le long du cercle 60 et en présentant des axes de coulissement par rapport à la matrice 17 localement perpendiculaires à la zone 31 de la face 30.

Ainsi, si l'on considère chaque plot 47 individuellement, et si l'on considère un plan parallèle à l'axe 18 (ou éventuellement incluant cet axe) et incluant l'axe 48 de ce plot 47, comme c'est par exemple le cas du plan de coupe repéré en IV-IV à la figure 3, on remarque que, dans les zones de l'empreinte 19 situées suivant ce plan et à proximité immédiate de celui-ci, de part et d'autre de lui, le plot 47 considéré délimite d'une part entre lui et l'orifice d'injection 43 une zone 61 dans laquelle une migration conjointe de deux matières fluides injectées successivement dans l'empreinte 19 peut se produire dans les conditions traditionnelles de l'injection bi-matière, c'est-à-dire avec interposition d'une pellicule continue de la matière injectée en premier de part et d'autre de la matière injectée en second, entre cette dernière et aussi bien la face convexe de moulage 20 que la face concave de moulage 30, et d'autre part, entre le plot 47 et la zone 29 de la face 26 du poinçon 16, une zone 62 dans laquelle la migration de la matière injectée en premier le long de la face concave de moulage 30 (et plus précisément le long de la zone 32 de celle-ci si l'on se réfère à la figure 4, étant entendu qu'un phénomène analogue se produit pour tout plot 47) ne peut intervenir librement ; le plot 47 provoque dans la matière injectée en premier une interruption immédiatement comblée par la matière injectée en second qui peut donc venir au contact direct de la face concave de moulage 30 (zone 32 dans l'exemple illustré à la figure 4) dans la zone 62 ; pour la mise en œuvre du procédé selon l'invention, dans cette zone 62, suivant le plan précité parallèle à l'axe 18 (ou incluant celui-ci) et incluant l'axe 48 du plot 47 considéré, débouchent dans la face concave de moulage 30 (c'est-à-dire dans la zone 32 dans l'exemple illustré à la figure 4) plusieurs évents 63 aménagés dans la matrice 17.

Par contre, les espaces 64 séparant deux plots 47 immédiatement voisins laissent migrer sans perturbation la matière injectée en premier, si bien que les conditions habituelles de l'injection bi-matière se retrouvent dans ces espaces 64, de même que dans des plans parallèles au plan 18 (ou incluant celui-ci) et passant par ces espaces 64, comme c'est le cas du plan de coupe repéré en V-V à la figure 3.

Pour la mise en œuvre du procédé selon l'invention, le moule qui vient d'être décrit est associé à une tête d'injection bi-matière 65 juxtaposée à la matrice 17 et présentant face au canal 44 suivant l'axe 18, et en communication étanche avec le canal 44, d'une part un conduit tubulaire 66 d'axe 18 et d'autre un conduit annulaire 67 disposé coaxialement autour du conduit 66 ; dans le cadre de la mise en œuvre du procédé selon l'invention, l'un de ces conduits, à savoir par exemple le conduit 66, est destiné à l'injection dans l'empreinte 19 d'une matière thermodurcissable de cœur à l'état fluide, et il est relié à cet effet à des moyens d'alimentation en une telle matière sous pression, de tels moyens étant connus de l'Homme du métier et ne nécessitant de ce fait pas de description ; l'autre de ces conduits, à savoir le conduit 67 dans cet exemple, est destiné à assurer l'injection, dans l'empreinte 19, de la matière thermoplastique de peau à l'état fluide, et il est relié à cet effet à des moyens d'alimentation en une telle matière portée à une température supérieure à sa température de plasto-élasticité ; pour maintenir à l'état fluide aussi bien la matière thermodurcissable de cœur que la matière thermoplastique de peau, la tête d'injection 65 présente autour du conduit 67 des moyens de chauffage 68 par exemple réalisés sous forme de résistances électriques afin de maintenir la matière thermoplastique du conduit 67 à une température supérieure à sa température de plasto-élasticité, alors que des moyens de réfrigération 69 réalisés par exemple sous la forme d'un circuit de circulation d'un fluide réfrigérant sont disposés autour du conduit 66 afin de maintenir la matière thermodurcissable à une température inférieure à sa température de polycondensation ; en outre, entre les moyens 69 et le conduit 67 est intercalée au moins une couche d'un isolant thermique approprié 70 ; la réalisation d'une telle tête d'injection 65 est du domaine des aptitudes normales d'un Homme du métier et la structure qui vient d'être décrite n'est nullement limitative, dès lors que sont conciliés les impératifs liés au maintien de la matière thermodurcissable comme de la matière thermoplastique à l'état fluide.

La mise en œuvre du procédé selon l'invention peut s'effectuer de la façon suivante au moyen d'une telle tête d'injection 65 et d'un moule 15, supposés assemblés dans une disposition relative coaxiale comme il est illustré à la figure 1, le poinçon 16 étant assemblé à la matrice 17 de façon à délimiter l'empreinte 19 et la tête d'injection 65 étant assemblée à la matrice 17 de telle sorte que le canal d'injection 44 de cette dernière, et avec lui l'ensemble de l'empreinte 19, soit en communication étanche avec les deux conduits 66 et 67 de la tête d'injection 65.

Initialement, les plots 47 occupent, sous l'action des moyens 58, leur position en saillie à l'intérieur de l'empreinte 19 comme il est illustré aux figures 1 à 4.

En prenant soin de choisir la matière thermoplastique de peau et la matière thermodurcissable de cœur de telle sorte que la température de polycondensation de la seconde soit supérieure à la température de plasto-élasticité de la première, on porte l'empreinte 19 du moule à une température intermédiaire entre ces deux températures, par circulation d'un fluide approprié dans les canaux 45 et 46, et l'on maintient cette température intermédiaire dans l'empreinte 19, grâce à une régulation de température de ce fluide par des moyens connus en eux-mêmes, pendant les deux phases successives d'injection de la matière thermoplastique de peau puis de la matière thermodurcissable de cœur qui vont être décrites à présent.

Dans un premier temps, on injecte via le conduit 67 la matière thermoplastique de peau à l'état fluide qui, compte tenu de la température à laquelle est portée l'empreinte 19, conserve sa fluidité ; le volume de matière thermoplastique de peau ainsi injecté correspond sensiblement au volume de la peau dans le réflecteur 1 à réaliser, soit généralement environ 1/3 du volume total de la couche de renforcement et de la couche de peau dans ce réflecteur, c'est-à-dire également environ 1/3 du volume de l'empreinte 19 si bien que la matière thermoplastique ainsi injectée reste groupée, dans cette empreinte 19, autour de l'orifice d'injection 43 et dans le canal 44 ; de préférence, le trajet séparant chacun des plots 47 de l'orifice d'injection 43 dans l'empreinte 19 est tel que ces plots 47 restent dégagés de la matière thermoplastique de peau ainsi injectée, même après injection de la totalité du volume désiré de cette matière.

Après cette injection, on enchaîne directement l'injection, via le conduit 66, de la matière thermodurcissable de cœur, que le maintien de l'empreinte 19 et, avec celle-ci, de la matière thermoplastique de peau à une température inférieure à sa température de polycondensation permet de conserver à l'état fluide, de même que la matière thermoplastique de peau ; au fur et à mesure de cette injection de la matière thermodurcissable, dont le volume total ainsi injecté correspond sensiblement au volume total de matière thermodurcissable prévu dans le réflecteur 1 à réaliser, et plus précisément au complément du volume de matière thermoplastique injectée en premier au volume total de l'empreinte 19, la matière thermodurcissable fait migrer progressivement la matière thermoplastique dans l'empreinte 19, dans le sens 71 d'un éloignement par rapport à l'orifice d'injection 43 et, jusqu'à ce que la matière thermoplastique atteigne ainsi les plots 47, on assiste au phénomène connu de formation d'une couche de matière thermodurcissable de cœur entre deux pellicules de matière thermoplastique de peau tapissant respectivement la face convexe de moulage 20 et la face concave de moulage 30.

Toutefois, dès lors que la matière thermoplastique de peau poussée par la matière thermodurcissable de cœur atteint les plots 47, ce phénomène connu ne se poursuit que dans les espaces 64 intermédiaires entre deux plots 47 voisins, puis, au fur et à mesure que la migration continue, dans chacun des espaces intercalaires entre deux zones 62 de l'empreinte 19 voisines ; la figure 5 illustre ce phénomène, et montre une couche 72 de matière thermodurcissable de cœur à l'état fluide, migrant dans le sens 71, de l'orifice d'injection 43 vers la zone 29 de la face 26 du poinçon 16, en poussant devant elle un volume 74 de matière thermoplastique de peau tapissant progressivement la face convexe de moulage 20 et la face concave de moulage 30 (et plus précisément les zones 22 et 32 de ces faces dans le cas de la coupe illustrée à la figure 5), de part et d'autre de la couche 72 de matière thermodurcissable de cœur ; ce phénomène se poursuit jusqu'à ce que le volume 74 de matière thermoplastique de peau vienne épouser la zone 29 de la face 26 de l'empreinte, et se trouve alors réduit à un minimum.

Par contre, dès lors que, au cours de la migration conjointe de la matière thermodurcissable de cœur et de la matière thermoplastique de peau enveloppant cette matière thermodurcissable de cœur, la pellicule 73 de matière thermoplastique de peau se développant au contact de la face concave de moulage 30 rencontre un plot 47, elle est entravée dans sa migration dans le sens 71 et se déchire comme on l'a illustré à la figure 4, si bien que la matière thermodurcissable de cœur 72 peut accéder librement, en aval du plot 47 si l'on se réfère au sens de migration 71, à la face concave de moulage 30 (et plus précisément à la zone 32 de celle-ci si l'on considère la coupe illustrée à la figure 4) ; compte tenu de ce que la pression à laquelle la matière thermodurcissable de cœur est injectée est dominante par rapport à la pression qui en résulte dans la matière thermoplastique de peau, compte tenu en outre d'un choix judicieux de la viscosité de la matière thermoplastique de peau, celle-ci ne peut reconstituer une pellicule au contact de la face concave de moulage 30 en aval de chacun des plots 47 dans le sens 71, si bien que se forment au contact de la face concave de moulage 30, dans la couche de matière thermoplastique de peau, des émergences de matière thermodurcissable de cœur, présentant la forme de nervures 75 s'étendant de chacun des plots 47, respectivement, jusqu'à la zone 29 de la face 26 du poinçon 16, dans chacune des zones 62 de l'empreinte ; ce phénomène est facilité par l'aspect de surface granité que présente avantageusement la face concave de moulage 30, lequel freine la migration de la matière thermoplastique de peau au contact de cette face 30 et s'oppose à une migration de la matière thermoplastique de peau au contact de cette face après formation d'une déchirure par un plot 47, en aval de ce plot si l'on se réfère au sens de migration 71.

La figure 3 illustre une phase intermédiaire de cette migration, et montre la formation des émergences de matière thermodurcissable de cœur 72 dans des indentations de matière thermoplastique de peau 73 tapissant par ailleurs la face concave de moulage 30.

Dès lors que, au cours de l'injection de la matière thermodurcissable de cœur et de sa migration conjointe avec la matière thermoplastique de peau, cette dernière a atteint et dépassé les différents plots 47, qui ont donné lieu à la formation d'interruptions dans cette matière thermoplastique de peau, on peut provoquer l'escamotage des différents plots 47, par une action sur les moyens 58 ; de préférence, cependant, cet escamotage n'est provoqué que lorsque pratiquement la totalité du volume désiré de la matière thermodurcissable de cœur a été injectée, ce qui permet d'assurer la stabilité des émergences en forme de nervures 75 de matière thermodurcissable de cœur ; l'escamotage de chacun des plots 47 libère dans l'empreinte 19 un volume immédiatement comblé en majeure partie par la matière thermodurcissable de cœur, et partiellement par la matière thermoplastique de peau.

Dès lors que l'injection de la matière thermodurcissable de cœur est terminée, de même que sa migration conjointe avec la matière thermoplastique de peau, on provoque un chauffage de l'empreinte 19 à une température supérieure à la température de polycondensation de la matière thermodurcissable de cœur, en faisant circuler à cet effet un fluide porté à la température convenable dans les canaux 45 et 46, et en assurant l'immobilisation relative de la matrice 17 du poinçon 16 ; il s'ensuit la polycondensation de la matière thermodurcissable de cœur, avec dégagement de gaz et de vapeur qui, via les nervures 75, s'acheminent dans les zones 62 vers les évents 63 qui les évacuent à l'extérieur de l'empreinte 19.

Lorsque la polycondensation est ainsi réalisée, on provoque le refroidissement de l'empreinte 19, par circulation d'un fluide porté à la température appropriée dans les canaux 45 et 46, jusqu'à une température inférieure à la température de plastoélasticité de la matière thermoplastique de peau, jusqu'au durcissement de cette dernière.

On obtient ainsi à l'intérieur de l'empreinte 19 une pièce rigide que l'on dégage ensuite en séparant le poinçon 16 de la matrice 17.

La pièce ainsi obtenue présente la forme générale de la paroi 3 du réflecteur 1 avant dépôt de la couche de métallisation réfléchissante 10, si ce n'est que cette pièce est intégralement fermée, à l'intérieur du rebord annulaire 12 formé par la rainure 37, par une rondelle de matière formée entre la zone 25 de la face convexe de moulage 20, d'une part, et la face 41 ainsi que le canal d'injection 44, d'autre part ; cette rondelle est ensuite éliminée par exemple par alésage, pour former le trou 11.

Les zones 21, 22, 23 de la face convexe de moulage 20 ayant formé respectivement la face 5 et les faces telles que 8 de la paroi 3 en leur communiquant leur poli spéculaire, la paroi 3 ainsi obtenue présente vers l'axe 2, correspondant à l'axe 18, une face concave intégralement définie par de la matière thermoplastique de peau 73 et présentant un poli spéculaire tel que l'on peut y déposer directement une couche métallique réfléchissante 10, par exemple une couche d'aluminium déposée sous vide, sans traitement préalable de cette face.

Les zones 31, 32, 33 de la face concave de moulage 30 ayant donné naissance respectivement à la face 6 et aux faces telles que 9 de la paroi 3, celle-ci présente également vers l'extérieur une couche de matière thermoplastique de peau 73 mais, dans des zones correspondantes aux zones 62 de l'empreinte de moulage 19, à cette couche de matière thermoplastique 73 se substituent des émergences localisées 75 de la matière thermodurcissable de cœur par ailleurs enveloppée intégralement par la matière thermoplastique de peau 73, ces émergences localisées 75 présentant par rapport au reste de la couche de matière thermodurcissable de cœur 72 la forme de nervures disjointes intercalées dans la matière thermoplastique de peau 73 ; la face 6 de même que les faces telles que 9 de la paroi 3 sont granitées du fait de leur formage par la face concave de moulage 30, mais cet aspect de surface est sans importance puisque ces faces sont dénuées de rôle optique ; les émergences 75 de matière thermodurcissable de cœur se prolongent jusqu'au chant 28 de la paroi 3.

Naturellement, de nombreuses matières thermoplastiques et matières thermodurcissables peuvent se prêter à la mise en œuvre du procédé, pourvu que la température de polycondensation de la matière thermodurcissable soit supérieure à la température de plastoélasticité de la matière thermoplastique.

A titre d'exemple non limitatif, on choisira avantageusement une matière thermoplastique de peau présentant une fluidité de 30 à 45 g (10 mn) suivant un étuvage soit de 3 heures à 150 °C, soit de 1 heure à 180 °C, suivant les normes ASTM D1238 (T), en maintenant l'empreinte de moulage 19 à une température de l'ordre de 130 °C à 180 °C lors de l'injection de cette matière thermoplastique de peau puis de l'injection de la matière thermodurcissable de cœur accompagnée de la migration conjointe des deux matières.

Par exemple, on choisira une matière thermoplastique de peau à structure cristalline dans le groupe comportant les polyoléfines (par exemple polyméthylène-pentène), les polyamides (par exemple homopolyamide aliphatique partiellement cristallin, polyamide 4.6, 6.6, 6G), les polyéthers (par exemple polyoxyphénylène), les polysulfures (par exemple polyphénylène-sulfure), les polyesters linéaires (par exemple polyéthylène-téréphtalate), et leurs mélanges ; de préférence, on y incorporera des microcharges minérales telles que de l'oxyde de titane, du sulfate de baryum ou autres pigments, par exemple à raison de 17 % environ, l'expérience ayant montré une telle adjonction facilite l'ancrage direct de la couche métallique réfléchissante 10 sur la matière thermoplastique de peau 73 ; la matière thermodurcissable de cœur sera choisie par exemple dans le groupe comportant les polyesters insaturés et les résines phénoliques, avantageusement chargés par exemple de fibres de verre, avec ou sans agent gonflant ; de préférence, on prévoira l'adjonction d'agent gonflant dans une proportion de l'ordre de 5 % environ, l'expérience montrant qu'une telle adjonction procure un gain de poids, facilite la mise en œuvre, et procure une répartition plus homogène des charges telles que les fibres de verre, en entraînant une notable amélioration des caractéristiques mécaniques du matériau thermodurcissable après polycondensation.

Naturellement, de nombreuses variantes de mise en œuvre du procédé qui vient d'être décrit pourront être apportées à celui-ci sans que l'on sorte pour autant du cadre de la présente invention ; notamment, la forme des plots 47 pourra être différente de la forme décrite et représentée, et l'on pourra par exemple donner à ces plots les formes illustrées aux figures 10 et 11, à savoir une forme dans laquelle la face conique 50 est remplacée par une face plane, respectivement 76 ou 77, et dans laquelle la face 49 est remplacée par une face hémicylindrique 78 d'axe 48 tournée vers l'amont en référence au sens de migration 71 et par une face plane 79 tournée vers l'aval en référence à ce sens (figure 10) ou par trois faces planes 80, 81, 82 jointives deux à deux le long d'arêtes rectilignes 83, 84, 85 parallèles à l'axe 48 et dont l'une 83 est tournée vers l'amont en référence au sens 71 alors que la face 82 délimitée par les deux autres arêtes 84, 85 est tournée vers l'aval en référence à ce sens ; quelle que soit la forme de plots choisie, on pourra également réaliser les moyens d'escamotage ou de mise en saillie de ces plots à l'intérieur de l'empreinte 19 du moule d'une façon différente de celle qui a été décrite et schématisée.

**Revendications**

1. Procédé de réalisation d'un réflecteur pour projecteur, notamment de véhicule automobile, comprenant la fabrication d'une paroi (3) comportant une couche de cœur (72), de volume déterminé, destinée à communiquer au réflecteur (1) ses caractéristiques de résistance mécanique et une couche de peau, (73, 74) de volume déterminé, enveloppant de part et d'autre là couche de cœur (72) en définissant une face concave lisse (5, 8) destiné à former une face réfléchissante du réflecteur (1), par la succession des étapes consistant à :

a) délimiter une empreinte (19) de moulage de la paroi (3), d'un volume correspondant sensiblement à la somme desdits volumes, au moyen d'une face convexe de moulage (20) présentant une forme complémentaire de celle de ladite face concave (5, 8), et d'une face concave de moulage (30) placée en regard de la face convexe de moulage (20) et espacée de cette dernière, en aménageant un orifice d'injection (43) débouchant dans l'empreinte (19),

b) injecter dans l'empreinte (19), via l'orifice d'injection (43), un volume d'une matière thermoplastique de peau (73, 74) correspondant sensiblement audit volume de la couche de peau, ladite matière thermoplastique (73, 74) présentant une température de plasto-élasticité déterminée et étant injectée à une température supérieure à cette température de plasto-élasticité,

c) injecter dans l'empreinte (19) et dans la matière thermoplastique de peau (73, 74), via l'orifice d'injection (43), un volume d'une matière de cœur (72) à l'état fluide correspondant sensiblement audit volume de la couche de cœur, en maintenant la matière thermoplastique de peau (73, 74) à une température supérieure à sa température de plasto-élasticité de telle sorte que la matière de cœur (72) à l'état fluide fasse migrer progressivement la matière thermoplastique de peau contre les faces convexe et concave de moulage (20, 30), dans le sens (71) d'un éloignement par rapport à l'orifice d'injection (43), et que la matière thermoplastique de peau (73, 74) s'intercale entre la matière de cœur (72), d'une part, les faces convexe et concave de moulage (20, 30), d'autre part, dans l'empreinte (19),

d) autoriser ou provoquer un durcissement de la matière thermoplastique de peau (73, 74), au moins, pour obtenir une paroi rigide (3) à l'intérieur de l'empreinte (19),

e) dégager de l'empreinte (19) la paroi rigide (3) ainsi obtenue, caractérisé en ce que :

lors de l'étape a, on place en saillie par rapport à la face concave de moulage (30), à l'intérieur de l'empreinte (19), une pluralité de plots (47) décalés par rapport à l'orifice d'injection (43), espacés mutuellement et vis-à-vis de la face convexe de moulage (20), pour interdire la migration de la matière thermoplastique de peau (73, 74), lors de l'étape c, contre des zones localisées de la face concave de moulage (30) (zones 62 de l'empreinte), situées à l'opposé de l'orifice d'injection (43) par rapport aux différents plots (47), respectivement, et autoriser alors l'accès de la matière de cœur (72) auxdites zones localisées de la face concave de moulage (30) (zones 62 de l'empreinte),

lors de l'étape c, on injecte à titre de matière de cœur une matière thermodurcissable (72) présentant une température de polycondensation supérieure à la température de plasto-élasticité de la matière thermoplastique de peau (73, 74), en maintenant l'empreinte de moulage (19) à une température intermédiaire entre lesdites températures respectivement de polycondensation et de plasto-élasticité, et l'on escamote lesdits plots (47) par rapport à la face concave de moulage (30) à un stade intermédiaire de l'injection de la matière thermodurcissable de cœur (72),

préalablement à l'étape d, on aménage des évents (63) débouchant dans l'empreinte (19) par lesdites zones localisées de la face concave de moulage (30) (zones 62 de l'empreinte),

lors de l'étape d, on provoque un chauffage de l'empreinte (19) à une température supérieure à la température de polycondensation de la matière thermodurcissable de cœur (72) puis on autorise ou provoque un refroidissement de l'empreinte (19) à une température inférieure à la température de plasto-élasticité de la matière thermoplastique de peau (73, 74).

2. Procédé selon la revendication 1, caractérisé en ce que l'on choisit ou l'on réalise une face convexe de moulage (20) présentant un poli spéculaire, et en ce que l'on applique une couche métallique réfléchissante (10) directement sur la face concave (5, 8) de la couche de peau (73), après l'étape e.

3. Procédé selon la revendication 2, caractérisé en ce que la matière thermoplastique de peau (73, 74) contient des micro-charges minérales.

4. Procédé selon l'une quelconque des revendications 1 à 3, caractérisé en ce que la matière thermoplastique de peau (73, 74) présente une fluidité de 30 à 45 grammes (10 minutes) suivant un étuvage soit de 3 heures à 150 °C, soit de 1 heure à 180 °C, suivant les normes ASTM D1238 (T), et en ce que l'on maintient l'empreinte de moulage (19) à une température de l'ordre de 130 °C à 180 °C lors des étapes b et c.

5. Procédé selon la revendication 4, caractérisé en ce que la matière thermoplastique de peau (73, 74) est choisie dans le groupe comportant les polyoléfines (par exemple polyméthylène-pentène), les polyamides (par exemple homopolyamide aliphatique partiellement cristallin, polyamide 4.6, 6.6, 6G), les polyéthers (par exemple polyoxyphénylène), les polysulfures (par exemple polyphénylène-sulfure), les polyesters linéaires (par exemple polyéthylène-téréphtalate), et leurs mélanges.

6. Procédé selon l'une quelconque des revendications 1 à 5, caractérisé en ce que le volume de matière thermoplastique de peau (73, 74) est de l'ordre de 1/3 du volume de l'empreinte (19).

7. Procédé selon l'une quelconque des revendications 1 à 6, caractérisé en ce que l'on choisit ou l'on réalise une face concave de moulage (30) granitée.

8. Procédé selon l'une quelconque des revendications 1 à 7, caractérisé en ce que la matière thermodurcissable de cœur (72) est chargée.

9. Procédé selon la revendication 8, caractérisé en ce que la matière thermodurcissable de cœur (72) est chargée de fibres de verre.

10. Procédé selon l'une quelconque des revendications 1 à 9, caractérisé en ce que la matière thermodurcissable de cœur (72) est choisie dans le groupe comportant les polyesters insaturés et les résines phénoliques avec ou sans agent gonflant.

11. Procédé selon l'une quelconque des revendications 1 à 10, caractérisé en ce que l'on escamote les plots (47) dans un stade final de l'injection de la matière thermodurcissable de cœur (72).

12. Réflecteur pour projecteur, notamment de véhicule automobile, comprenant une paroi (3) comportant une couche de cœur (72) communiquant au réflecteur (1) ses caractéristiques de résistance mécanique et une couche de peau en matière thermoplastique (72, 74) enveloppant de part et d'autre la couche de cœur (72) en définissant une face concave (5, 8) destinée à former une face réfléchissante du réflecteur (1) et une face convexe (6, 9) située à l'opposé de la face concave (5, 8), caractérisé en ce que la couche de cœur (72) est en une matière thermodurcissable et présente des émergences localisées (75) à travers la couche de peau (73, 74) en matière thermoplastique, jusqu'à ladite face convexe (6, 9).

13. Réflecteur selon la revendication 12, caractérisé en ce que lesdites émergences localisées (75) présentent la forme de nervures disjointes de matière thermodurcissable de cœur (72) dans la couche de peau (73, 74).

14. Réflecteur selon l'une quelconque des revendications 12 et 13, caractérisé en ce que ladite face concave (5, 8) présente un poli spéculaire et porte directement une couche métallique réfléchissante (10).

15. Réflecteur selon la revendication 14, caractérisé en ce que la couche de peau (73, 74) contient des micro-charges minérales.

16. Réflecteur selon l'une quelconque des revendications 12 à 15, caractérisé en ce que la matière thermoplastique de peau (73, 74) est choisie dans le groupe comportant les polyoléfines (par exemple polyméthylène-pentène), les polyamides (par exemple homopolyamide aliphatique partiellement cristallin, polyamide 4.6, 6.6, 6G), les polyéthers (par exemple polyoxyphénylène), les polysulfures (par exemple polyphénylène-sulfure), les polyesters linéaires (par exemple polyéthylène-téréphtalate) et leurs mélanges.

17. Réflecteur selon l'une quelconque des revendications 12 à 16, caractérisé en ce que la couche de peau (73, 74) présente un volume de l'ordre de 1/3 de la somme des volumes respectifs de la couche de peau (73, 74) et de la couche de cœur (72).

18. Réflecteur selon l'une quelconque des revendications 12 à 17, caractérisé en ce que ladite face convexe (6, 9) est granitée.

19. Réflecteur selon l'une quelconque des revendications 12 à 18, caractérisé en ce que la couche de cœur (72) est chargée.

20. Réflecteur selon la revendication 19, caractérisé en ce que la couche de cœur (72) est chargée de fibres de verre.

21. Réflecteur selon l'une quelconque des revendications 12 à 20, caractérisé en ce que la couche de cœur (72) est en un matériau choisi dans le groupe comportant les polyesters insaturés et les résines phénoliques, expansés ou non.

22. Moule pour la mise en œuvre du procédé selon l'une quelconque des revendications 1 à 11, comportant une face convexe de moulage (20) et une face concave de moulage (30) mutuellement espacées, définissant entre elles une empreinte de moulage (19), et un orifice d'injection (43) débouchant dans ladite empreinte (19), caractérisé en ce qu'il comporte une pluralité de plots (47) dans des emplacements respectifs espacés mutuellement et par rapport à l'orifice d'injection (43), des moyens (51, 58) pour placer à volonté lesdits plots (47) dans une position dans laquelle ils font saillie par rapport à la face concave de moulage (30), à l'intérieur de l'empreinte de moulage (19), en étant espacés de la face convexe de moulage (20), et dans une position dans laquelle ils sont escamotés par rapport à la face concave de moulage (30), et des évents débouchant par la face concave de moulage (30) dans des zones (62) de l'empreinte (19) situées respectivement à l'opposé de l'orifice d'injection (43) par rapport à chacun des emplacements de plots (47).

23. Moule selon la revendication 22, caractérisé en ce que la face convexe de moulage (20) présente un poli spéculaire.

24. Moule selon l'une quelconque des revendications 22 et 23, caractérisé en ce que la face concave de moulage (30) est granitée.

25. Moule selon l'une quelconque des revendications 22 à 24, caractérisé en ce qu'il comporte des moyens (45, 46) de circulation de fluide le long de l'empreinte de moulage (19).


**Claims**

1. Method of producing a reflector for a headlight, particularly for an automobile, comprising the manufacture of a wall (3) having a core layer (72), of predetermined volume, intended to give said reflector (1) its characteristics of mechanical strength and a skin layer (73, 74) of predetermined volume, at least partially enclosing said core layer (72) on both sides, whilst defining a smooth concave face (5, 8) intended to form a reflective face of said reflector (1), by the succession of stages consisting in :

a) delimiting an impression (19) for moulding said wall (3), of a volume substantially corresponding to the sun of said predetermined volumes, by means of a convex moulding face (20) having a shape complementary to that of said concave face (5, 8) and of a concave moulding face (30) placed opposite said convex moulding face (20) and spaced from this latter, whilst arranging an injection aperture (43) opening into said impression (19).

b) injecting into said impression (19), via said injection aperture (43) a volume of thermoplastic skin material (73, 74) corresponding substantially to said predetermined volume of the skin layer, said thermoplastic material (73, 74) having a predetermined plasto-elasticity temperature and being injected at a temperature greater than this plasto-elasticity temperature,

c) injecting into said impression (19) and into said thermoplastic skin material (73, 74), via said injection aperture (43) a volume of core material (72) in a fluid state corresponding substantially to said predetermined volume of said core layer, whilst maintaining said thermoplastic skin material (73, 74) at a temperature greater than its plasto-elasticity temperature so that said core material (72) in fluid state causes said thermoplastic skin material to progressively migrate against said convex and concave moulding faces (20, 30), in the direction (71) of extension with respect to said injection aperture (43) and that said thermoplastic skin material (73, 74) is sandwiched in the impression (19) between on the one hand said core material (72) and on the other hand said convex and concave moulding faces (20, 30).

d) permitting or causing a hardening of said thermoplastic skin material (73, 74), at least, to obtain a rigid wall (3) inside said impression (19).

e) disengaging from said impression (19) said rigid wall (3) thus obtained, characterized in :

during stage a, placing, projecting with respect to said concave moulding face (30), inside said impression (19), a plurality of points (47) spaced with respect to said injection aperture (43), spaced both mutually and with respect to said convex moulding face (20), for preventing the migration of said thermoplastic skin material (73, 74) during stage c, against localised zones of said concave moulding face (30) (zones 62 of the impression), situated opposite from said injection aperture (43) with respect to said different points (47), respectively, and then permitting access of said core material (72) to said localised zones of said concave moulding face (30) (zones 62 of the impression),

during stage c, injecting by way of core material a thermosetting material (72) having a polycondensation temperature greater than the plastoelasticity temperature of said thermoplastic skin material (73, 74), whilst maintaining said moulding impression (19) at a temperature intermediate between said temperatures respectively of polycondensation and of plasto-elasticity and withdrawing said points (47) with respect to said concave moulding face (30) at an intermediate stage of said injection of said thermosetting core material (72),

preliminarily to stage d, arranging vents (63) opening into said impression (19) through said localised zones of said concave moulding face (30) (zones 62 of the impression),

during stage d, causing heating of said impression (19) to a temperature greater than said polycondensation temperature of said thermosetting core material (72) then permitting or causing a cooling of said impression (19) to a temperature lower than said plasto-elasticity temperature of said thermoplastic skin material (73, 74).

2. Method according to claim 1, characterized in that said convex moulding face (20) is chosen or made to have a mirror finish, and a reflective metallic layer (10) is applied directly onto said concave face (5, 8) of said skin layer (73), after stage e.

3. Method according to claim 2, characterized in that said thermoplastic skin material (73, 74) contains mineral micro-loadings.

4. Method according to anyone of claims 1 to 3, characterized in that said thermoplastic skin material (73, 74) has a fluidity of 30 to 45 grammes (10 minutes) following a baking either of three hours at 150 °C or of one hour at 180 °C, following the standards ASTM D1238 (T), and said impression (19) is maintained at a temperature of the order of 130 °C to 180 °C during stages b and c.

5. Method according to claim 4, characterized in that said thermoplastic skin material (73, 74) is chosen amongst the group comprising polyolefins (for example pentene polymethylene), polyamides (for example partially crystalline aliphatic homopolyamide, 4.6, 6.6, 6G polyamide), polyethers (for example polyoxyphenylene), polysulfures (for example sulfure polyphenylene), linear polyesters (for example terephtalate polyethylene) and their mixtures.

6. Method according to anyone of claims 1 to 5, characterized in that said volume of thermoplastic skin material (73, 74) is of the order of 1/3 of the volume of said impression (19).

7. Method according to anyone of claims 1 to 6, characterized in that said concave moulding face (30) is chosen or made crackled.

8. Method according to anyone of claims 1 to 7, characterized in that said thermosetting core material (72) is loaded.

9. Method according to claim 8, characterized in that said thermosetting core material (72) is loaded with glass fibres.

10. Method according to anyone of claims 1 to 9, characterized in that said thermosetting core material (72) is chosen amongst the groupe comprising unsaturated polyesters and phenolic resins with or without an inflating agent.

11. Method according to anyone of claims 1 to 10, characterized in that said points (47) are withdrawn during a final stage of injection of said thermosetting core material (72).

12. Reflector for a headlight, particularly for an automobile, comprising a wall (3) having a core layer (72) giving said reflector (1) its characteristics of mechanical strength and a skin layer in thermoplastic material (73, 74) enclosing from side to side said core layer (72) whilst defining a concave face (5, 8) intended to form a reflective face of said reflector and a convex face (6, 9) situated opposite said concave face (5, 8), characterized in that said core layer (72) is of thermosetting material and has localised emergences across said skin layer (73, 74) of said thermoplastic material, up to said convex face (6, 9).

13. Reflector according to claim 12, characterized in that said localised emergences (75) have the form of discrete ribs of thermosetting core material (72) in said skin layer (73, 74).

14. Reflector according to anyone of claims 12 and 13, characterized in that said concave face (5, 8) has a mirror finish and carries directly a reflective metallic layer (10).

15. Reflector according to claim 14, characterized in that said skin layer (73, 74) contains mineral microloadings.

16. Reflector according to anyone of claims 12 to 15, characterized in that said thermoplastic skin material (73, 74) is chosen amongst the group comprising polyolefins (for example pentene polymethylene), polyamides (for example partially crystalline aliphatic homopolyamide, 4.6, 6.6, 6G polyamide), polyethers (for example polyoxyphenylene), polysulfures (for example sulfure polyphenylene), linear polyesters (for example terephtalate polyethylene) and their mixtures.

17. Reflector according to anyone of claims 12 to 16, characterized in that said skin layer (73, 74) has a volume of the order of 1/3 of the sum of the respective volumes of said skin layer (73, 74) and of said core layer (72).

18. Reflector according to anyone of claims 12 to 17, characterized in that said convex face (6, 9) is crackled.

19. Reflector according to anyone of claims 12 to 18, characterized in that said core layer (72) is loaded.

20. Reflector according to claim 19, characterized in that said skin layer (72) is loaded with glass fibres.

21. Reflector according to anyone of claims 12 to 20, characterized in that said skin layer (72) is of a material chosen amongst the group comprising unsaturated polyesters and phenolic resins, expanded or not.

22. Mould for operating said method according to anyone of claims 1 to 11, comprising a convex moulding face (20) and a concave moulding face (30) mutually spaced, and defining between them a moulding impression (19), and an injection aperture (43) opening into said impression (19), characterized in that it comprises a plurality of points (47) in respective places spaced both mutually and with respect to said injection aperture (43), means (51, 58) for positioning at will said points (47) in a position in which they project with respect to said concave moulding face (30), inside said moulding impression (19), and are spaced from said convex moulding face (20), and in a position in which they are withdrawn with respect to said concave moulding face (30) and vents opening via said concave moulding face (30) into zones (62) of said impression (19) respectively situated opposite from the said injection aperture (43) with respect to each of said positions of said points (47).

23. Mould according to claim 22, characterized in that said convex moulding face (20) has a mirror finish.

24. Mould according to anyone claims 22 and 23, characterized in that said concave moulding face (30) is crackled.

25. Mould according to anyone of claims 22 to 24, characterized in that it includes means (45, 46) for circulation of fluid along the length of said moulding impression (19).


**Patentansprüche**

1. Verfahren zur Herstellung eines Reflektors für Scheinwerfer, insbesondere für Kraftfahrzeuge, umfassend die Anfertigung einer Wand (3) mit einer Kernschicht (72) von einem bestimmten Volumen, die dazu bestimmt ist, dem Reflektor (1) seine mechanischen Festigkeitseigenschaften zu verleihen, und einer Außenschicht (73, 74) von einem bestimmten Volumen, welche unter Begrenzung einer zur Bildung einer Reflexionsfläche des Reflektors (1) bestimmten glatten konkaven Fläche (5, 8) die Kernschicht (72) beiderseits einhüllt, durch die Aufeinanderfolge der Schritte, in denen

a) ein Matrizenhohlraum (19) zum Formen der Wand (3) von einem der Summe der genannten Volumen im wesentlichen entsprechenden Volumen mittels einer konvexen Formfläche (20) von der Gestalt der genannten konkaven Fläche (5, 8) komplementärer Gestalt und einer konkaven Formfläche (30), welche der konvexen Formfläche (20) gegenüber und im Abstand von ihr angeordnet ist, unter Ausbildung einer in den Matrizenhohlraum (19) mündenden Spritzöffnung (43), begrenzt wird,

b) in den Matrizenhohlraum (19) über die Spritzöffnung (43) ein dem genannten Volumen der Außenschicht im wesentlichen entsprechendes Volumen eines thermoplastischen Außenschicht-Materials (73, 74) eingespritzt wird, wobei das genannte thermoplastische Material (73, 74) eine bestimmte Plasto-Elastizitäts-Temperatur hat und bei einer höheren Temperatur als diese Plasto-Elastizitäts-Temperatur eingespritzt wird,

c) in den Matrizenhohlraum (19) und in das thermoplastische Außenschicht-Material (73, 74) über die Spritzöffnung (43) ein dem genannten Volumen der Kernschicht im wesentlichen entsprechendes Volumen eines Kernschicht-Materials (72) in fließfähigem Zustand eingespritzt wird, wobei das thermoplastische Außenschicht-Material (73, 74) auf einer höheren Temperatur als seine Plasto-Elastizitäts-Temperatur gehalten wird, derart, daß das in fließfähigem Zustand befindliche Kernschicht-Material (72) das thermoplastische Außenschicht-Material veranlaßt, allmählich in der Richtung (71) einer Fortbewegung von der Spritzöffnung (43) gegen die konvexe und die konkave Formfläche (20, 30) zu wandern, und daß sich das thermoplastische Außenschicht-Material (73, 74) zwischen einerseits das Kernschicht-Material (72) und andererseits die konvexe und die konkave Formfläche (20, 30) im Matrizenhohlraum (19) schiebt,

d) eine Härtung wenigstens des thermoplastischen Außenschicht-Materials (73, 74) zugelassen oder hervorgerufen wird, um im Innern des Matrizenhohlraums (19) eine steife Wand (3) zu erhalten,

e) die so erhaltene steife Wand (3) aus dem Matrizenhohlraum (19) entnommen wird, dadurch gekennzeichnet, daß während des Schrittes a im Innern des Matrizenhohlraums (19) eine Vielzahl von gegenüber der Spritzöffnung (43) versetzten, mit gegenseitigem Zwischenabstand und im Abstand von der konvexen Formfläche (20) angeordneten Stiften (47) so in Stellung gebracht werden, daß sie aus der konkaven Formfläche (30) herausragen, um während des Schrittes (c) die Wanderung des thermoplastischen Außenschicht-Materials (73, 74) gegen örtlich begrenzte Zonen der konkaven Formfläche (30) (Zonen 62 des Matrizenhohlraums), die, bezogen auf die verschiedenen jeweiligen Stifte (47), auf der der Spritzöffnung (43) abgewandten Seite gelegen sind, zu unterbinden und dann den Zugang des Kernschicht-Materials (72) zu den genannten örtlich begrenzten Zonen der konkaven Formfläche (30) (Zonen 62 des Matrizenhohlraums) zuzulassen,

während des Schrittes c als Kernschicht-Material ein warmhärtbares Material (72) von einer Polykondensations-Temperatur, die höher ist als die Plasto-Elastizitäts-Temperatur des thermoplastischen Außenschicht-Materials (73, 74), eingespritzt wird, wobei der Form-Matrizenhohlraum (19) auf einer Temperatur zwischen den genannten jeweiligen Polykondensations- und Plasto-Elastizitäts-Temperaturen gehalten wird, und die genannten Stifte (47) in einem Zwischenstadium der Einspritzung von warmhärtbarem Kernschicht-Material (72) gegenüber der konkaven Formfläche (30) eingezogen werden,

vor dem Schritt d Entlüftungskanäle (63) ausgebildet werden, die in den örtlich begrenzten Zonen der konkaven Formfläche (30) (Zonen 62 des Matrizenhohlraums) in den Matrizenhohlraum (19) münden,

während des Schrittes d eine Erwärmung des Matrizenhohlraums (19) auf eine höhere Temperatur als die Polykondensations-Temperatur des warmhärtbaren Kernschicht-Materials (72) hervorgerufen, sodann eine Abkühlung des Matrizenhohlraums (19) auf eine tiefere Temperatur als die Plasto-Elastizitäts-Temperatur des thermoplastischen Außenschicht-Materials (73, 74) zugelassen oder hervorgerufen wird.

2. Verfahren nach Anspruch 1, dadurch gekennzeichnet, daß eine hochglänzende konvexe Formfläche (20) gewählt oder hergestellt wird, und daß eine reflektierende metallische Schicht (10) auf die konkave Fläche (5, 8) der Außenschicht (73) nach dem Schritt e direkt aufgetragen wird.

3. Verfahren nach Anspruch 2, dadurch gekennzeichnet, daß das thermoplastische Außenschicht-Material (73, 74) mineralische Mikrofüllstoffe enthält.

4. Verfahren nach einem der Ansprüche 1 bis 3, dadurch gekennzeichnet, daß das thermoplastische Außenschicht-Material (73, 74) eine Fluidität von 30 bis 45 g (10 Minuten) nach einem Ofenaufenthalt entweder von 3 h bei 150 °C oder von 1 h bei 180 °C, nach ASTM D1238 (T), hat, und daß der Form-Matrizenhohlraum (19) bei den Schritten b und c auf einer Temperatur von etwa 130 bis 180 °C gehalten wird.

5. Verfahren nach Anspruch 4, dadurch gekennzeichnet, daß das thermoplatische Außenschicht-Material (73, 74) aus der Gruppe mit den Polyolefinen (z. B. Polymethylenpenten), den Polyamiden (z. B. teilkristallines aliphatisches Homopolyamid, Polyamid 4.6, 6.6, 6G), den Polyethern (z. B. Polyoxyphenylen), den Polysulfiden (z. B. Polyphenylensulfid), den linearen Polyestern (z. B. Polyethylenterephthalat) und ihren Gemischen gewählt wird.

6. Verfahren nach einem der Ansprüche 1 bis 5, dadurch gekennzeichnet, daß das Volumen thermoplastischen Außenschicht-Materials (73, 74) etwa 1/3 des Volumens des Matrizenhohlraums (19) beträgt.

7. Verfahren nach einem der Ansprüche 1 bis 6, dadurch gekennzeichnet, daß eine gekörnte konkave Formfläche (30) gewählt oder hergestellt wird.

8. Verfahren nach einem der Ansprüche 1 bis 7, dadurch gekennzeichnet, daß das warmhärtbare Kernschicht-Material (72) verstärkt ist.

9. Verfahren nach Anspruch 8, dadurch gekennzeichnet, daß das warmhärtbare Kernschicht-Material (72) glasfaserverstärkt ist.

10. Verfahren nach einem der Ansprüche 1 bis 9, dadurch gekennzeichnet, daß das warmhärtbare Kernschicht-Material (72) aus der Gruppe mit den ungesättigten Polyestern und den Phenolharzen, die ein Treibmittel enthalten können, gewählt wird.

11. Verfahren nach einem der Ansprüche 1 bis 10, dadurch gekennzeichnet, daß die Stifte (47) in einer Endphase der Einspritzung des warmhärtbaren Kernschicht-Materials (72) eingezogen werden.

12. Reflektor für Scheinwerfer, insbesondere für Kraftfahrzeuge, umfassend eine Wand (3) mit einer Kernschicht (72), die dem Reflektor (1) seine mechanischen Festigkeitsmerkmale verleiht, und einer Außenschicht aus thermoplastischem Material (7, 74), welche die Kernschicht (72) beidseitig einhüllt, wobei sie eine zur Bildung einer reflektierenden Fläche des Reflektors (1) bestimmte konkave Fläche (5, 8) und eine der konkaven Fläche (5, 8) gegenüberliegende konvexe Fläche (6, 9) begrenzt, dadurch gekennzeichnet, daß die Kernschicht (72) aus einem warmhärtbaren Material ist und durch die Außenschicht (73, 74) aus thermoplastischem Material hindurch bis zur genannten konvexen Fläche (6, 9) örtlich begrenzte Vorsprünge (75) aufweist.

13. Reflektor nach Anspruch 12, dadurch gekennzeichnet, daß die genannten örtlich begrenzten Vorsprünge (75) die Gestalt von getrennten Rippen aus warmhärtbarem Kernschicht-Material (72) in der Außenschicht (73, 74) haben.

14. Reflektor nach einem der Ansprüche 12 und 13, dadurch gekennzeichnet, daß die genannte konkave Fläche (5, 8) hochglänzend ist und eine reflektierende metallische Schicht (10) direkt trägt.

15. Reflektor nach Anspruch 14, dadurch gekennzeichnet, daß die Außenschicht (73, 74) mineralische Mikrofüllstoffe enthält.

16. Reflektor nach einem der Ansprüche 12 bis 15, dadurch gekennzeichnet, daß das thermoplastische Außenschicht-Material (73, 74) aus der Gruppe mit den Polyolefinen (z. B. Polymethylenpenten), den Polyamiden (z. B. teilkristallines aliphatisches Homopolyamid, Polyamid 4.6, 6.6, 6G), den Polyethern (z. B. Polyoxyphenylen), den Polysulfiden (z. B. Polyphenylensulfid), den linearen Polyestern (z. B. Polyethylenterephthalat) und ihren Gemischen gewählt ist.

17. Reflektor nach einem der Ansprüche 12 bis 16, dadurch gekennzeichnet, daß die Außenschicht (73, 74) ein Volumen von etwa 1/3 der Summe der jeweiligen Volumen der Außenschicht (73, 74) und der Kernschicht (72) hat.

18. Reflektor nach einem der Ansprüche 12 bis 17, dadurch gekennzeichnet, daß die genannte konvexe Fläche (6, 9) gekörnt ist.

19. Reflektor nach einem der Ansprüche 12 bis 18, dadurch gekennzeichnet, daß die Kernschicht (72) verstärkt ist.

20. Reflektor nach Anspruch 19, dadurch gekennzeichnet, daß die Kernschicht (72) glasfaserverstärkt ist.

21. Reflektor nach einem der Ansprüche 12 bis 20, dadurch gekennzeichnet, daß die Kernschicht (72) aus einem Werkstoff ist, der aus der Gruppe mit den ungesättigten Polyestern und den Phenolharzen, die geschäumt sein können, gewählt ist.

22. Formwerkzeug für die Durchführung des Verfahrens nach einem der Ansprüche 1 bis 11, umfassend eine konvexe Formfläche (20) und eine konkave Formfläche (30), die mit Zwischenabstand angeordnet sind und zwischen sich einen Form-Matrizenhohlraum (19) begrenzen, und eine in den genannten Matrizenhohlraum (19) mündende Spritzöffnung (43), dadurch gekennzeichnet, daß es eine Vielzahl von Stiften (47) an im Abstand voneinander und von der Spritzöffnung (43) gelegenen jeweiligen Stellen aufweist, Mittel (51, 58) zum beliebigen Verbringen der genannten Stifte (47) in eine Stellung, in der sie aus der konkaven Formfläche (30) im Innern des Form-Matrizenhohlraums (19) herausragen, wobei sie von der konvexen Formfläche (20) Abstand halten, und in eine Stellung, in der sie in die konkave Formfläche (30) eingezogen sind, und Entlüftungskanäle, die in der konkaven Formfläche (30) in Zonen (62) des Matrizenhohlraumes (19) münden, welche, bezogen auf jeden der Plätze der Stifte (47), jeweils auf der entgegengesetzten Seite der Spritzöffnung (43), gelegen sind.

23. Formwerkzeug nach Anspruch 22, dadurch gekennzeichnet, daß die konvexe Formfläche (20) hochglänzend ist.

24. Formwerkzeug nach einem der Ansprüche 22 und 23, dadurch gekennzeichnet, daß die konkave Formfläche (30) gekörnt ist.

25. Formwerkzeug nach einem der Ansprüche 22 bis 24, dadurch gekennzeichnet, daß es entlang dem Form-Matrizenhohlraum (19) Fluidumwälzmittel (45, 46) aufweist.

FIG-1

FIG-3

FIG-2

2

FIG-4

FIG-5

0 197 830

FIG-6

FIG-7

FIG-8

FIG-9

FIG-10

FIG-11

0 197 830